(19) Europäisches Patentamt / European Patent Office / Office européen des brevets

(11) EP 4 718 788 A2

(12) EUROPEAN PATENT APPLICATION

(43) Date of publication:
01.04.2026 Bulletin 2026/14

(51) International Patent Classification (IPC):
H04L 25/00 (2006.01)

(21) Application number: 26157982.5

(22) Date of filing: 26.04.2019

(52) Cooperative Patent Classification (CPC):
H04L 5/0057; H04B 7/0478; H04L 5/0046;
H04L 5/0064; H04L 5/0094; H04L 25/0204;
H04L 25/0256; H04L 5/0005; H04L 5/0023

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(62) Document number(s) of the earlier application(s) in
accordance with Art. 76 EPC:
19925590.2 / 3 959 917

(71) Applicant: NEC Corporation
108-8001 Tokyo (JP)

(72) Inventors:
• WANG, Gang
Beijing, 100600 (CN)
• YUAN, Fang
Beijing, 100600 (CN)

(74) Representative: Mathys & Squire
The Shard
32 London Bridge Street
London SE1 9SG (GB)

Remarks:
This application was filed on 11-02-2026 as a divisional application to the application mentioned under INID code 62.

(54) **METHOD, DEVICE AND COMPUTER READABLE MEDIUM FOR CHANNEL STATE INFORMATION TRANSMISSION**

(57) Embodiments of the present disclosure relate to methods, devices and computer readable media for Channel State Information (CSI) transmission. In example embodiments, a method for communication includes determining a payload of channel state information for at least one transmission layer, the at least one transmission layer used for communication between a terminal device and a network device; in response to a determination that the payload exceeds a capacity of available uplink resources, discarding a portion of the channel state information, the discarded portion at least comprising an indication specific to one of the at least one transmission layer; and transmitting, to the network device, remaining portion of the channel state information.

```
1000

1010
DETERMINE A PAYLOAD OF CHANNEL STATE INFORMATION FOR
AT LEAST ONE TRANSMISSION LAYER

1020
THE PAYLOAD EXCEEDS A CAPACITY OF
AVAILABLE UPLINK RESOURCES?
        YES
1030
DISCARD A PORTION OF THE CHANNEL STATE INFORMATION, THE
DISCARDED PORTION AT LEAST COMPRISING AN INDICATION
SPECIFIC TO ONE OF THE AT LEAST ONE TRANSMISSION LAYER

1040
TRANSMIT, TO THE NETWORK DEVICE, REMAINING PORTION OF
THE CHANNEL STATE INFORMATION
```

Fig. 10

EP 4 718 788 A2

Description

## TECHNICAL FIELD

Embodiments of the present disclosure generally relate to the field of communication, and in particular, to methods, devices and computer readable media for channel state information (CSI) transmission.

## BACKGROUND

Communication technologies have been developed in various communication standards to provide a common protocol that enables different wireless devices to communicate on a municipal, national, regional, and even global level. An example of an emerging communication standard is new radio (NR), for example, 5G radio access. NR is a set of enhancements to the Long Term Evolution (LTE) mobile standard promulgated by Third Generation Partnership Project (3GPP). It is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL) as well as support beamforming, multiple-input multiple-output (MIMO) antenna technology, and carrier aggregation.

In the communication systems, generally Channel State Information (CSI) of a communication channel between a terminal device and a network device is estimated at the receiving terminal device and fed back to the network device to enable the network device to control transmission based on the current channel conditions indicated by the CSI. According to the NR technology, it has been proposed that channel properties for both wideband and subbands and for different beams (in MIMO systems) are to be reported in the CSI, which results in a large overhead for the CSI transmission.

## SUMMARY

In general, example embodiments of the present disclosure provide methods, devices and computer readable media for CSI transmission.

In a first aspect, there is provided a method for communication. The method comprises determining a payload of channel state information for at least one transmission layer, the at least one transmission layer used for communication between a terminal device and a network device; in response to a determination that the payload exceeds a capacity of available uplink resources, discarding a portion of the channel state information, the discarded portion at least comprising an indication specific to one of the at least one transmission layer; and transmitting, to the network device, remaining portion of the channel state information.

In a second aspect, there is provided a method for communication. The method comprises determining an ordered subset of frequency domain (FD) basis for at least one transmission layer, the at least one transmission layer configured for communication between a terminal device and a network device, the ordered subset of FD basis selected from an ordered set of FD basis; determining an intermediate set of FD basis by a shifting operation based on the ordered subset of FD basis; and transmitting at least a number indication to the network device as part of channel state information, the number indication indicating a number of FD basis in the intermediate set.

In a third aspect, there is provided a method for communication. The method comprises determining a plurality of subbands for a terminal device, the plurality of subbands being continuously distributed in frequency domain or spaced apart evenly in frequency domain; and transmitting a subband indication for the plurality of subbands to the terminal device to enable channel state estimation by the terminal device on the plurality of subbands.

In a fourth aspect, there is provided a method for communication. The method comprises receiving a subband indication for a plurality of subbands from a network device, the plurality of subbands being continuously distributed in frequency domain or spaced apart evenly in frequency domain; determining the plurality of subbands based on the subband indication; and performing channel state estimation on the plurality of subbands.

In a fifth aspect, there is provided a device. The device includes a processor; and a memory coupled to the processing unit and storing instructions thereon, the instructions, when executed by the processing unit, causing the device to perform the method according to the first aspect.

In a sixth aspect, there is provided a device. The device includes a processor; and a memory coupled to the processing unit and storing instructions thereon, the instructions, when executed by the processing unit, causing the device to perform the method according to the second aspect.

In a seventh aspect, there is provided a device. The device includes a processor; and a memory coupled to the processing unit and storing instructions thereon, the instructions, when executed by the processing unit, causing the device to perform the method according to the third aspect.

In an eighth aspect, there is provided a device. The device includes a processor; and a memory coupled to the processing unit and storing instructions thereon, the instructions, when executed by the processing unit, causing the device to perform the method according to the fourth aspect.

In a ninth aspect, there is provided a computer readable medium having instructions stored thereon, the instructions, when executed on at least one processor, causing the at least one processor to carry out the method according to the first aspect.

In a tenth aspect, there is provided a computer readable medium having instructions stored thereon, the instructions, when executed on at least one processor, causing the at least one processor to carry out the method according to the second aspect.

In an eleventh aspect, there is provided a computer readable medium having instructions stored thereon, the instructions, when executed on at least one processor, causing the at least one processor to carry out the method according to the third aspect.

In a twelfth aspect, there is provided a computer readable medium having instructions stored thereon, the instructions, when executed on at least one processor, causing the at least one processor to carry out the method according to the fourth aspect.

Other features of the present disclosure will become easily comprehensible through the following description.

**BRIEF DESCRIPTION OF THE DRAWINGS**

Through the more detailed description of some embodiments of the present disclosure in the accompanying drawings, the above and other objects, features and advantages of the present disclosure will become more apparent, wherein:

Fig. 1 is a schematic diagram of a communication environment in which embodiments according to some aspects of the present disclosure can be implemented;

Fig. 2 is a schematic diagram illustrating a process for subband indication transmission according to some embodiments of the present disclosure;

Fig. 3A shows a schematic diagram illustrating a plurality of subbands according to some embodiments of the present disclosure;

Fig. 3B shows a schematic diagram illustrating a plurality of subbands according to some embodiments of the present disclosure;

Fig. 4 is a schematic diagram illustrating a process for CSI transmission according to some embodiments of the present disclosure;

Fig. 5A shows a schematic diagram illustrating the discarding of CSI according to some embodiments of the present disclosure;

Fig. 5B shows a schematic diagram illustrating the discarding of CSI according to some embodiments of the present disclosure;

Fig. 6 shows a schematic diagram illustrating change of CSI according to some embodiments of the present disclosure;

Fig. 7 is a schematic diagram illustrating a process for CSI compression according to some embodiments of the present disclosure;

Fig. 8 shows a schematic diagram illustrating FD basis selection according to some embodiments of the present disclosure;

Fig. 9A shows a schematic diagram illustrating FD basis selection according to some embodiments of the present disclosure;

Fig. 9B shows a schematic diagram illustrating FD basis selection according to some embodiments of the present disclosure;

Fig. 10 shows a flowchart of an example method in accordance with some embodiments of the present disclosure;

Fig. 11 shows a flowchart of an example method in accordance with some embodiments of the present disclosure;

Fig. 12 shows a flowchart of an example method in accordance with some embodiments of the present disclosure;

Fig. 13 shows a flowchart of an example method in accordance with some embodiments of the present disclosure; and

Fig. 14 is a simplified block diagram of a device that is suitable for implementing embodiments of the present disclosure.

Throughout the drawings, the same or similar reference numerals represent the same or similar element.

## DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitations as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

As used herein, the term "network device" or "base station" (BS) refers to a device which is capable of providing or hosting a cell or coverage where terminal devices can communicate. Examples of a network device include, but not limited to, a Node B (NodeB or NB), an Evolved NodeB (eNodeB or eNB), a NodeB in new radio access (gNB) a Remote Radio Unit (RRU), a radio head (RH), a remote radio head (RRH), a low power node such as a femto node, a pico node, and the like. For the purpose of discussion, in the following, some embodiments will be described with reference to gNB as examples of the network device.

As used herein, the term "terminal device" refers to any device having wireless or wired communication capabilities. Examples of the terminal device include, but not limited to, user equipment (UE), personal computers, desktops, mobile phones, cellular phones, smart phones, personal digital assistants (PDAs), portable computers, image capture devices such as digital cameras, gaming devices, music storage and playback appliances, or Internet appliances enabling wireless or wired Internet access and browsing and the like.

As used herein, the singular forms "a", "an" and "the" are intended to include the plural forms as well, unless the context clearly indicates otherwise. The term "includes" and its variants are to be read as open terms that mean "includes, but is not limited to." The term "based on" is to be read as "based at least in part on." The term "one embodiment" and "an embodiment" are to be read as "at least one embodiment." The term "another embodiment" is to be read as "at least one other embodiment." The terms "first," "second," and the like may refer to different or same objects. Other definitions, explicit and implicit, may be included below.

In some examples, values, procedures, or apparatus are referred to as "best," "lowest," "highest," "minimum," "maximum," or the like. It will be appreciated that such descriptions are intended to indicate that a selection among many used functional alternatives can be made, and such selections need not be better, smaller, higher, or otherwise preferable to other selections.

In NR Release 15, the codebook defined for transmission using one beam is referred to as a type I codebook. A terminal device reports CSI for one beam, and subband parameters are reported. When available resources are not enough to transmit the CSI, the terminal device may discard some of CSI per subband. For example, parameters related to even subbands may be discarded first.

Recently, in NR, the terminal device is required to report CSI for more than one beam (for example, L beams) and the corresponding codebook is referred to as a type II codebook, which is enhanced by frequency domain compression. Unlike the type I codebook, there is no subband parameter according to the type II codebook. Therefore, there is a need to handle CSI transmission for type II codebook, including omission and compression of the overhead for CSI transmission.

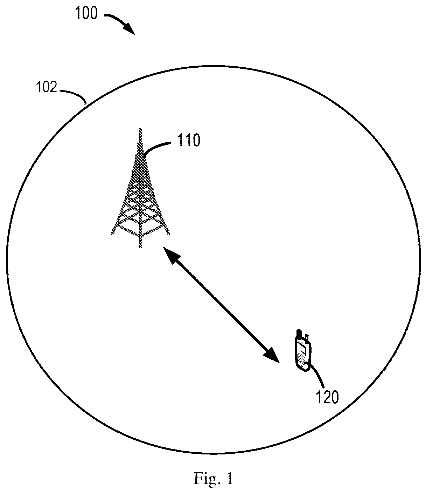

Embodiments of the present disclosure provide a solution for CSI transmission, in order to solve the above problems of omission and compression for CSI transmission and one or more of other potential problems. Principle and implementations of the present disclosure will be described in detail below with reference to Figs. 1-13.

Fig. 1 shows an example communication network 100 in which implementations of the present disclosure can be implemented. The network 100 includes a network device 110 and a terminal device 120 served by the network device 110. The serving area of the network device 110 is called as a cell 102. It is to be understood that the number of network devices and terminal devices is only for the purpose of illustration without suggesting any limitations. The network 100 may include any suitable number of network devices and terminal devices adapted for implementing implementations of the present disclosure. Although not shown, it is to be understood that one or more terminal devices may be located in the cell 102 and served by the network device 110.

In the communication network 100, the network device 110 can communicate data and control information to the terminal device 120 and the terminal device 120 can also communication data and control information to the network device 110. A link from the network device 110 to the terminal device 120 is referred to as a downlink (DL) or a forward link, while a link from the terminal device 120 to the network device 110 is referred to as an uplink (UL) or a reverse link.

Depending on the communication technologies, the network 100 may be a Code Division Multiple Access (CDMA) network, a Time Division Multiple Address (TDMA) network, a Frequency Division Multiple Access (FDMA) network, an Orthogonal Frequency-Division Multiple Access (OFDMA) network, a Single Carrier-Frequency Division Multiple Access (SC-FDMA) network or any others. Communications discussed in the network 100 may use conform to any suitable standards including, but not limited to, New Radio Access (NR), Long Term Evolution (LTE), LTE-Evolution, LTE-Advanced (LTE-A), Wideband Code Division Multiple Access (WCDMA), Code Division Multiple Access (CDMA), cdma2000, and Global System for Mobile Communications (GSM) and the like. Furthermore, the communications may be performed according to any generation communication protocols either currently known or to be developed in the future. Examples of the communication protocols include, but not limited to, the first generation (1G), the second generation (2G), 2.5G, 2.75G, the third generation (3G), the fourth generation (4G), 4.5G, the fifth generation (5G) communication protocols. The techniques described herein may be used for the wireless networks and radio technologies mentioned above as well as other wireless networks and radio technologies. For clarity, certain aspects of the techniques are described below for LTE, and LTE terminology is used in much of the description below.

In communications, the terminal device 120 is configured to estimate and report CSI of a communication channel between the terminal device 120 and the network device 110. The CSI can be determined by the terminal device 120 using downlink reference signals transmitted by the network device 110.

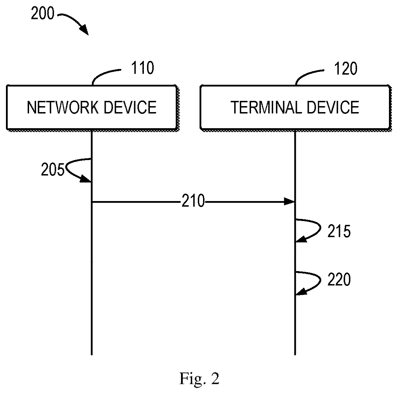

Fig. 2 is a schematic diagram illustrating a process 200 for subband indication transmission according to some embodiments of the present disclosure. The network device 110 determines 205 a plurality of subbands for the terminal device 120 to perform channel state estimation. The plurality of subbands determined by the network device 110 need to be regularly distributed in frequency domain. For example, the plurality of subbands are continuously distributed in frequency domain or spaced apart evenly in frequency domain.

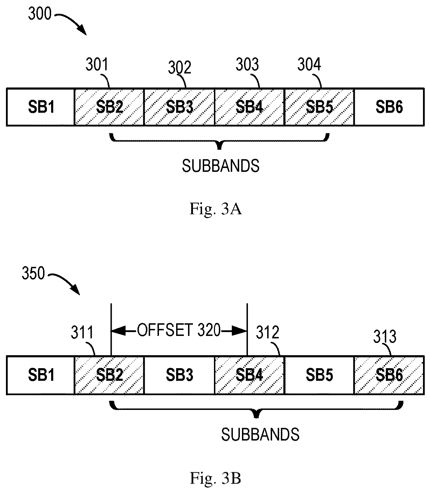

Referring to Figs. 3A and 3B, Fig. 3A shows a schematic diagram 300 illustrating a plurality of subbands 301-304 according to some embodiments of the present disclosure and Fig. 3B show a schematic diagram 350 illustrating a plurality of subbands 311-313 according to some embodiments of the present disclosure. In the example of Fig. 3A, the four subbands 301-304 selected by the network device 110 are continuously distributed in frequency domain. In the example of Fig. 3B, the three subbands 311-313 selected by the network device 120 are spaced apart evenly in frequency domain with an offset 320.

The network device 110 transmits 210 a subband indication for the plurality of subbands to the terminal device 120 to enable channel state information estimation by the terminal device 120 on the plurality of subbands. The subband indication can be determined based on the configuration of the plurality of subbands.

The plurality of subbands may be indicated by a variety of ways. The subband indication may include an indication of a starting subband and an indication of a number of subbands in the plurality of subbands. For the example shown in Fig. 3A, the subband indication may include an index of the subband 301 and an indication of the number or length of the plurality of subbands 301-304. Alternatively or additionally, the subband indication may include an indication of the starting subband and an indication of an ending subband. For example, the subband indication may include an index of the subband 301 and an index of the subband 304. The index of the subband 301 and the index of the subband 304 can be indicated by combinatorial index number, which are two indices selected from a number of indices.

The subband indication may include an indication of the starting subband, an indication of the number of subbands in the plurality of subbands or the length of the plurality of subbands and an indication of an offset between adjacent subbands in the plurality of subbands. For the example shown in Fig. 3B, the subband indication may include an index of the subband 311, a number of subbands in the plurality of subbands 311-313 (3, in this example), and an indication of the offset 320. Alternatively or additionally, the subband indication may include an indication of the starting subband, an indication of the ending subband and an indication of the offset between adjacent subbands in the plurality of subbands. For example, the subband indication may include an index of the subband 311, an index of the subband 313 and an indication of the offset 420.

The subband indication may include an indication of positions of the plurality of subbands in a wideband. For example, the subband indication may include a bitstring with with'1's in adjacent positions only or equally spaced with fixed offset.

Upon receiving the subband indication for the plurality of subbands from a network device 110, the terminal device 120 determines 215 the plurality of subbands based on the subband indication. Then the terminal device 120 performs 220 channel state estimation on the plurality of subbands. For the example shown in Fig. 3A, the terminal device 120 may perform the channel state estimation on the subbands 301-304; for the example shown in Fig. 3B, the terminal device 120 may perform the channel state estimation on the subbands 311-313.

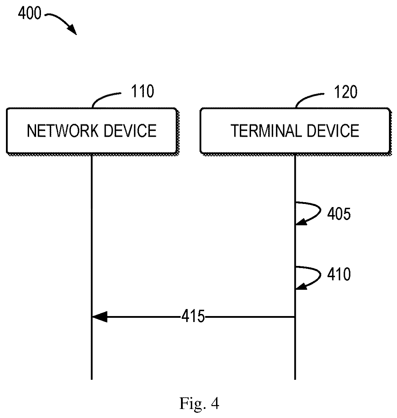

Fig. 4 is a schematic diagram illustrating a process 400 for CSI transmission according to some embodiments of the present disclosure. After performing channel estimation between the network device 110 and the terminal device 120 across a predetermined frequency range for a plurality of beams having different spatial directions, the terminal device 120 may determine the CSI to be reported to the network device 110. In some embodiments, the channel estimation may be performed on the subbands indicated by the network device 110 as described above with reference to Fig. 2. However, the embodiments described with reference to Fig. 4 are not limited in this regard. The CSI report will be transmitted as a part of uplink control information (UCI) using uplink resources, for example, be included in uplink data channel, such as physical uplink shared channel(PUSCH). The UCI may also include other information which may have a higher priority than the CSI report. In this case, the terminal device 120 may need to determine whether the available uplink resource is large enough to carry the CSI. For example, the number of bits that can be carried in available uplink resource may be less than that of the CSI report, or the actual coding rate to carry the full CSI report on the available uplink resources may be larger than a coding rate threshold. Then the full CSI report cannot be transmitted on the available resources.

The terminal device 120 determines 405 a payload of CSI for at least one transmission layer. The CSI for at least one transmission layer is indicated to be reported for communication between the terminal device 110 and the network device 120. In MIMO scenario, the network device 110 may configure the maximum number of transmission layers for the terminal device 120 to report the CSI for communication, and the terminal device 120 may indicate the actual number of transmission layers as the rank information in the CSI report to the network device 110. The actual number of transmission layers reported by the terminal device 120 may be equal to or less than the maximum number of transmission layers configured by the network device 110. The transmission layer may also be referred to as a layer for brevity, for example, layer 1, layer 2, layer 3 and layer 4.

In response to a determination that the payload exceeds a capacity of available uplink resources, the terminal device 120 discards 410 a portion of the channel state information. The discarded portion at least comprises an indication specific to one of the at least one transmission layer. For example, if the terminal device 120 determines that the available resources for UCI is not enough to carry the CSI report or the actual coding rate is larger than the coding rate threshold, at least a portion of the CSI may be discarded by the terminal device 120.

The terminal device 120 transmits 415 remaining portion of the channel state information to the network device 110. The payload of the remaining portion is equal to or smaller than the capacity of the available uplink resources. It is to be noted that in some embodiments, the actual payload of the remaining portion may be zero, which means that the CSI is not reported to the network device 110. For example, the full CSI is discarded. Upon reception of the CSI from the terminal device 120, the network device 110 may for example determine a codeword from a CSI codebook (for example, type II CSI codebook) based on the received CSI to control transmission with the terminal device 120.

Now detailed description will be given below to illustrate how to discard at least a portion of CSI. To better understand the example embodiments of the present disclosure, the enhanced type II codebook is described first. The space-frequency matrix $W$ for layer $r$ can be represented by the following equation (1):

$$W = W_1 \widetilde{W}_2^{(r)} W_f^{(r)H} \qquad (1)$$

If $R$ layers are indicated by the terminal device 120, equation (1) may be expressed as:

$$W = [W_1 \widetilde{W}_2^{(1)} W_f^{(1)H}, \ W_1 \widetilde{W}_2^{(2)} W_f^{(2)H}, \ ..., W_1 \widetilde{W}_2^{(R)} W_f^{(R)H}] \qquad (2)$$

where R may be equal to $1,...,R_{max}$ and $R_{max}$ is configured by the network device110. $W_1$ and $W_f^{(r)}$ are composed of selected bases from a set of spatial domain (SD) basis and a set of frequency domain (FD) basis, respectively. The dimension of the coefficient matrix $\widetilde{W}_2^{(r)}$ is $2L \times M$, with $L$ and $M$ as the number of selected SD basis and FD basis, respectively.

$W_1$, which is layer common, can be expressed as:

$$W_1 = \begin{bmatrix} v_0 v_1 ... v_{L-1} & 0 \\ 0 & v_0 v_1 ... v_{L-1} \end{bmatrix} \qquad (3)$$

The selection of SD basis $\{v_l\}_{l=0}^{L-1}$ is common for any layer $r$. For example, the $L$ SD bases may be selected from a group of $N_1 N_2 \times 1$ orthogonal Discrete Fourier Transform (DFT) vectors. Additionally, there may be $O_1 O_2$ groups of DFT

vectors, and an oversampling factor is used to select one group out of all the $O_1O_2$ groups. $W_f^{(r)}$ ,which is layer specific, can be expressed as:

$$W_f^{(r)} = \left[ f_{k_0}^{(r)} f_{k_1}^{(r)} \cdots f_{k_{M_r-1}}^{(r)} \right] \qquad (4)$$

The selection of FD basis $\left\{ f_{k_m}^{(r)} \right\}_{m=0}^{M_r-1}$ is specific to each layer $r$. For example, the $M_r$ FD bases may be selected from $N_3 \times 1$ orthogonal DFT vectors, and the index $k_i$ applies to $1 \le k_i \le N_3$ for $i = 0, ..., M_r - 1$.

The coefficient matrix $\widetilde{W}_2^{(r)}$ can be expressed as:

$$\widetilde{W}_2^{(r)} = E^{(r)} \odot \begin{bmatrix} p_0^{(\text{ref})} \widetilde{P}_0^{(r)} \widetilde{\Phi}_0^{(r)} & \\ & p_1^{(\text{ref})} \widetilde{P}_1^{(r)} \widetilde{\Phi}_1^{(r)} \end{bmatrix} \qquad (5)$$

where $E^{(r)}$ represents a bitmap of $2LM_r$ for a layer $r$ and indicates whether there is a gain for a pair of SD and FD basis; $\widetilde{P}_i^{(r)} = \left\{ p_{l.m}^{(r)} \right\}_{l \in [1,...,L], m \in [1,...,M_r]}$ represents an amplitude for a gain of a pair of SD basis $v_l$ and FD basis $f_{k_m}^{(r)}$ ; $\widetilde{\Phi}_i^{(r)} = \left\{ \varphi_{l.m}^{(r)} \right\}_{l \in [1,...,L], m \in [1,...,M_r]}$ represents a phase for a gain of a pair of SD basis $v_l$ and FD basis $f_{k_m}^{(r)}$ . $p_0^{(\text{ref})} \widetilde{P}_0^{(r)} \widetilde{\Phi}_0^{(r)}$ and $p_1^{(\text{ref})} \widetilde{P}_1^{(r)} \widetilde{\Phi}_1^{(r)}$ represents two different polarizations. $p_0^{(\text{ref})}$ and $p_1^{(\text{ref})}$ are the reference amplitude of strongest coefficient indicators (SCI) for the two polarizations, respectively and may be reported to the network device 110.

Table 1 shows exemplary parameters or indications determined by the terminal device 120 and to be reported to the network device 110. It is to be noted that the parameters or indications shown in Table 1 and the division of UCI into three parts are given for purpose of discussion without any limitation. More or less parameters or indications may be included in CSI report and the UCI may be divided in any other suitable manner. For example, the UCI may be divided into two parts, part 1 and part 2.

Table 1 Exemplary parameters to be included in CSI report

| | Parameter | Description |
|---|---|---|
| **UCI part 1** | RI+NNZC | RI: rank information for the number of layers<br>NNZC: number of non-zero coefficients for the layers, $K$. The payload of UCI part 2A+2B is determined by the value of NNZC, $K$. |
| | [Size indication of intermediate set $N_3'$ ] | Indication of value of $N_3'$ |
| | Wideband CQI of 1st TB | |
| | Subband CQI of 1st TB | |
| **UCI part 2A:** | SD basis subset selection indicator | Indication of the selected L out of N1*N2 SD basis, and selected oversampling factor |
| | [Indication of intermediate FD basis set] | Indication of the selected $N_3'$ out of N3 FD basis for all the layers |

(continued)

| | Parameter | Description |
|---|---|---|
| **UCI part 2B:** | FD basis subset selection indicator | Indication of the selected $M_r$ out of $N_3'$ FD basis for the $r$-th layer |
| | Bitmap for each layer | Indication via a bitmap for whether there is a coefficient for a pair of selected SD and FD basis in each layer and the number of coefficients $K_r$ in each layer |
| | Strongest coefficient indicator (SCI) | Indication of the location of the strongest coefficient in the bitmap |
| | LC coefficients: phase | Indication for the phase of the selected SD and FD basis in each layer according to the bitmap for that layer |
| | LC coefficients: amplitude | Indication for the phase of the selected SD and FD basis in each layer according to the bitmap for that layer |

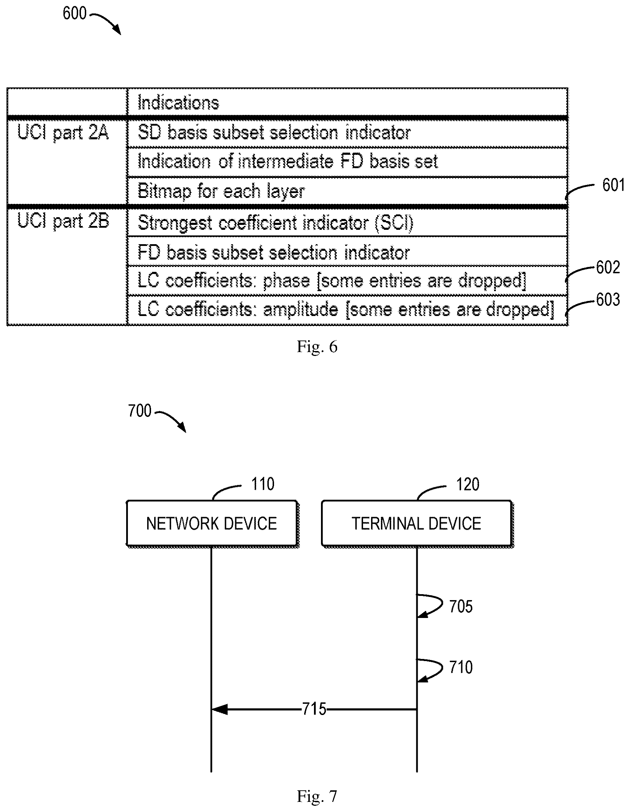

In the example shown in Table 1, UCI is divided into three parts, part 1, part 2A and part 2B. UCI part 1 includes overall or general parameters, for example, "RI" indicating the number of transmission layers to be reported. The parameter "NNZC" indicates the number of non-zero coefficients for the layers, for example the number of "1"s in the bitmap $\boldsymbol{E}^{(r)}$. The number of non-zero coefficients for all the reported layers in UCI part 1 determines the payload size of the remaining UCI. In some embodiments, UCI part 1 may further include the parameter "size indication of intermediate set $N_3''$", which will be detailed below with reference to Figs. 7-9.

In the example of Table 1, UCI part 2A includes layer common parameters or indications, for example, "SD basis subset selection indicator" indicating the selection of SD basis $\{\boldsymbol{v}_i\}_{i=0}^{L-1}$, which is applied to all the reported layers. In some embodiments, UCI part 2A may further include the parameter "indication of intermediate FD basis set", which will be detailed below with reference to Figs. 7-9.

UCI part 2B includes layer specific parameters or indications, which are related to $\boldsymbol{W}_f^{(r)}$ and $\widetilde{\boldsymbol{W}}_2^{(r)}$, as described above.

In some embodiments, the terminal device 120 may determine, from the channel state information, a group of layer-specific indications for at least one of the at least one transmission layer, and discard the group of layer-specific indications. The group of layer-specific indications to be discarded may be determined in several ways.

In an embodiment, the terminal device 120 may discard layer-specific indications for all of the at least one transmission layer, for example, all the parameters included in UCI part 2B as shown in Table 1. In such embodiment, after discarding all the layer-specific indications, if the available resources are still not enough to transmit the remaining portion of CSI, the terminal device 120 may further discard the layer common indications. For example, the parameters included in UCI part 2A as shown in Table 1 may be discarded. If the available resources are still not enough, parameters included in UCI part 1 may also be discarded. Therefore, in such embodiment, different portions of CSI are prioritized based on positions in UCI.

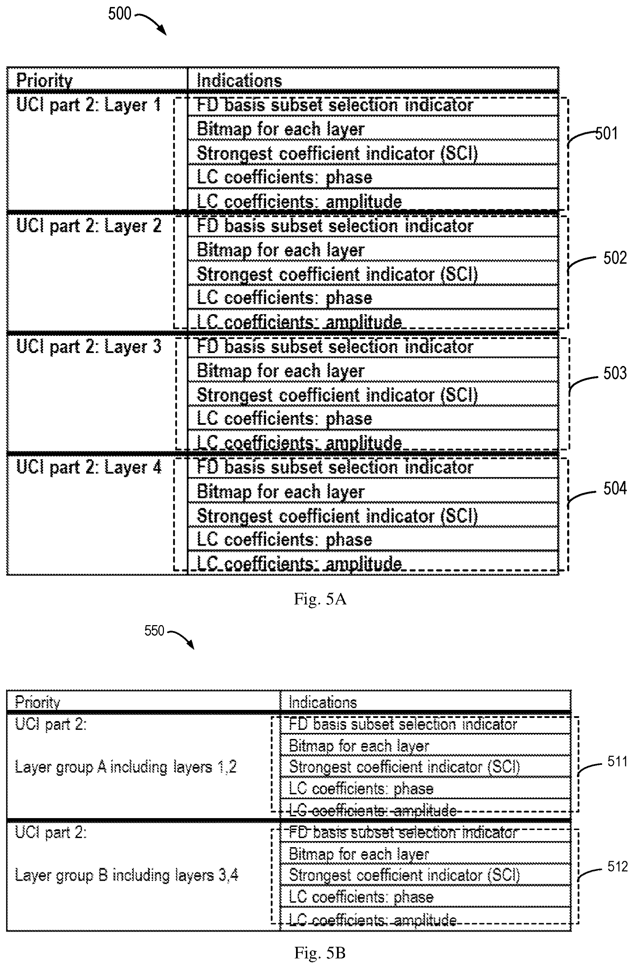

The discarding of CSI may be further refined. For example, different portions of CSI may be prioritized based on at least one of different transmission layers, different groups of transmission layers and particular indications. In an embodiment, different portions of CSI may be prioritized based on different transmission layers. Referring to Fig. 5A, Fig. 5A shows a schematic diagram 500 illustrating the discarding of CSI according to some embodiments of the present disclosure. In the example shown in Fig. 5A, the indication groups 501-504 comprise layer-specific indications for layers 1, 2, 3 and 4, respectively.

For example, priorities for these indication groups may be defined as: indication group 501> indication group 502> indication group 503> indication group 504. As such, indications in the indication group 504 will be discarded first and then the indication group 503, and so on. Referring to equation (2), this means that parameters related to $\widetilde{W}_2^{(4)}$ and $W_f^{(4)}$ may be discarded first and then the parameters related to $\widetilde{W}_2^{(3)}$ and $W_f^{(3)}$.

In another embodiment, different portions of CSI may be prioritized based on different groups of transmission layers. Referring to Fig. 5B, Fig. 5B shows a schematic diagram 550 illustrating the discarding of CSI according to some embodiments of the present disclosure. In the example shown in Fig. 5B, layers 1, 2, 3 and 4 are divided into two layer groups, layer group A and layer group B. The indication group 511 comprises layer-specific indications for layer group A,

8

i.e. for layers 1, 2 in this example and the indication group 512 comprises layer-specific indications for layer group B, i.e. for layers 3, 4 in this example.

For example, priorities for these indication groups may be defined as indication group 511> indication group 512. As such, indications in the indication group 512 will be discarded first and then the indication group 511. Referring to equation (2), this means that parameters related to $\widetilde{W}_2^{(3)}$, $W_f^{(3)}$, $\widetilde{W}_2^{(4)}$ and $W_f^{(4)}$ may be discarded first and then parameters related to $\widetilde{W}_2^{(1)}$, $W_f^{(1)}$, $\widetilde{W}_2^{(2)}$ and $W_f^{(2)}$.

In a further embodiment, priorities for different indications may be further refined. Referring to Table 1, for example, the parameters "LC coefficients: phase" and "LC coefficients: amplitude" may have the lowest priority and the parameter "Strongest coefficient indicator" may have a higher priority than the parameters "LC coefficients: phase" and "LC coefficients: amplitude". The parameter "RI+NNZC " may have the highest priority.

It is to be understood that aspects of the above embodiments where portions of CSI are discarded based on priorities may be combined. For example, the parameters "LC coefficients: phase" and "LC coefficients: amplitude" for layer 4 may be discarded first.

In some embodiments, the overhead for CSI transmission may be reduced by reporting less actual NNZC value (the number of the non-zero coefficients) in UCI part 2 (which, in the example of Table 1, comprises part 2A and part 2B) than reported in UCI part 1. For purpose of discussion, in this disclosure, $K_r$ is used to represent the value of NNZC reported in UCI part 1 for layer $r$ and $K''_r$ is used to represent the actual number of non-zero LC coefficients to be reported in UCI part 2, that is, the number of pairs of amplitude indication and phase indication for a gain for a pair of SD and FD basis.

Referring to Fig. 6, Fig. 6 shows a schematic diagram 600 illustrating change of CSI according to some embodiments of the present disclosure. In such embodiments, indication 601, i.e. bitmap $\boldsymbol{E}^{(r)}$ for each layer, may be changed and some entries in indications 602 and 603 may be dropped or discarded. That is, by changing some entries of the bitmap $\boldsymbol{E}^{(r)}$ from "1" to "0", the corresponding pairs of amplitude indication and phase indication may be discarded and not reported to the network device 110, which would be reported if the capacity of uplink resources was enough.

In an embodiment, the terminal device 120 may discard at least one pair of LC coefficients for each of the transmission layers. For example, the terminal device 120 may determines a first number of non-zero coefficients for a first transmission layer of the at least one transmission layer, the first number of non-zero coefficients indicating a number of pairs of amplitude indication and phase indication for a gain to be reported to the network device 110. For example, the first number of non-zero coefficients for layer 1 may be denoted as $K''_1$. The terminal device 120 may then select the first number of pairs of amplitude indication and phase indication from a first plurality of pairs of amplitude indication and phase indication for the first transmission layer. For example, for layer 1, the terminal device 120 may select $K''_1$ pairs of LC coefficients (phase and amplitude) from $K_1$ pairs of LC coefficients.

Next, the terminal device 120 may update a non-zero coefficient indication for the first transmission layer based on the first number of pairs of amplitude indication and phase indication, and the non-zero coefficient indication indicates positions of the first number of pairs of amplitude indication and phase indication. For example, the terminal device 120 may update the bitmap (indication 601) for layer 1 according to the selected pairs of LC coefficients. The terminal device 120 may then discard at least one pair of amplitude indication and phase indication in the first plurality of pairs of amplitude indication and phase indication other than the first number of pairs of amplitude indication and phase indication. For example, the terminal device 120 may discard the other $K_1 - K''_1$ pairs of LC coefficients for layer 1.

The terminal device 120 may repeat the above process for each of the transmission layers, for example, each of layers 1, 2, 3 and 4. The value of $K''_r$ may be fixed, for example as a ratio of $K_r$, such as, $K_r/2$. The value of $K''_r$ may be alternatively indicated by higher layer. The ratio may be the same or different for different layers. In such embodiment, the size of the indication 601, i.e. the bitmap for each layer, is unchanged but the sum of "1"s in the bitmap for each layer indicating the number of actually reported non-zero coefficients is smaller than the value of NNZC in UCI part 1. The sizes of the indications 602 and 603 are reduced and thus the payload of UCI part 2 is reduced.

For example, in UCI part 1, the value of NNZC is 6 for layer 1, where $L$=2, $M_1$=4. Before discarding, in UCI part 2, the bitmap for layer 1 may be [10010100 10000101]. After discarding, in UCI part 2, the bitmap for layer 1 may be [10000100 10000100], where instead of 6 only 4 non-zero coefficients are reported. The bit values which are changed from 1 to 0 correspond to the non-zero coefficients which are discarded.

In such embodiment, the $K''_r$ pairs of LC coefficients may be determined based on the amplitude values for the $K_r$ pairs of LC coefficients. The terminal device 120 may determine an amplitude value for each pair of the first plurality of pairs of amplitude indication and phase indication (e.g. the $K_r$ pairs of LC coefficients), and select the first number of pairs of amplitude indication and phase indication (e.g. the $K''_r$ pairs of LC coefficients) based on the determined amplitude values.

For example, the $K''_r$ pairs of LC coefficients may be selected based on the following equation:

$$\text{Min} \left\| \mathbf{H}_r - \frac{1}{P_r} \begin{bmatrix} \sum_{l=0}^{L-1} p_0^{(\text{r, ref})} \mathbf{v}_l \left( \sum_{m=0}^{M_r-1} E_{l,m}^{(r)} p_{l.m}^{(r)} \varphi_{l.m}^{(r)} f_{k_m}^{(\text{r})*} \right) \\ \sum_{l=0}^{L-1} p_1^{(\text{r,ref})} \mathbf{v}_l \left( \sum_{m=0}^{M_r-1} E_{l+L,m}^{(r)} p_{l+L.m}^{(r)} \varphi_{l+L.m}^{(r)} f_{k_m}^{(\text{r})*} \right) \end{bmatrix} \right\| \qquad (6)$$

where $\mathbf{H}_r$ is the channel estimation result for layer $r$, and $P_r$ is the scaling factor. The equation is used to minimize the MMSE of CSI distortion in layer $r$ by choosing to drop the indications related to non-zero coefficients with smaller amplitudes. $\{p_i^{(r,\text{ref})} p_{l.m}^{(r)}\}$ are ordered for each layer according to amplitude, and the first largest $K''_r$ pairs of amplitudes and their phases are reported, the remaining ones are discarded.

In another embodiment, the terminal device 120 may discard at least one pair of LC coefficients for a group of transmission layers, which means $K''_S = \Sigma_{r \in S} K''_r < K_S = \Sigma_{r \in S} K_r$, where the group $S$ of transmission layers is configured by higher layer. For example, the terminal device 120 may determine a second number ($K''_S$) of non-zero coefficients for the group $S$ of transmission layers, where S={1,...,R}. The second number ($K''_S$) of non-zero coefficients indicates a number of pairs of amplitude indication and phase indication for a gain to be reported to the network device 110. Then, the terminal device 120 may select the second number of pairs of amplitude indication and phase indication (e.g. $K''_S$ pairs of LC coefficients) from a second plurality of pairs of amplitude indication and phase indication (e.g. $K_S$ pairs of LC coefficients) for the group $S$ of transmission layers. In some embodiments, the group $S$ of transmission layers may include all of the transmission layers. In this case, $K_S = K$.

Next, the terminal device 120 may update a non-zero coefficient indication for each of the at least one transmission layer based on the second number of pairs of amplitude indication and phase indication, and the non-zero coefficient indication indicates positions of the selected pairs of amplitude indication and phase indication for respective transmission layer. For example, the bitmap (indication 601) for layer r may be set accordingly to indicate the $K''_r$ pairs of LC coefficients.

The terminal device 120 may then discard at least one pair of amplitude indication and phase indication in the second plurality of pairs of amplitude indication and phase indication other than the second number of pairs of amplitude indication and phase indication. For example, the terminal device 120 may discard the other ($K_S - K''_S$) pairs of LC coefficients.

In such embodiment, the $K''_S$ pairs of LC coefficients may be determined based on the amplitude values for the $K_S$ pairs of LC coefficients for the group $S$ of the layers. The terminal device 120 may determine an amplitude value for each pair of the second plurality of pairs of amplitude indication and phase indication (e.g. the $K_S$ pairs of LC coefficients), and select the second number of pairs of amplitude indication and phase indication (e.g. the $K''_S$ pairs of LC coefficients) based on the determined amplitude values.

For example, when $S$ indicates all the layers (where $K''_S = K''$), the $K''$ pairs of LC coefficients may be selected based on the following equation:

$$\text{Min} \left\| [[\mathbf{H}_1 \quad ... \mathbf{H}_R] - [\frac{1}{P_1} \begin{bmatrix} \sum_{l=0}^{L-1} p_0^{(1,\text{ref})} \mathbf{v}_l \left( \sum_{m=0}^{M_1-1} E_{l,m}^{(1)} p_{l.m}^{(1)} \varphi_{l.m}^{(1)} f_{k_m}^{(1)*} \right) \\ \sum_{l=0}^{L-1} p_1^{(1,\text{ref})} \mathbf{v}_l \left( \sum_{m=0}^{M_1-1} E_{l+L,m}^{(1)} p_{l+L.m}^{(1)} \varphi_{l+L.m}^{(1)} f_{k_m}^{(1)*} \right) \end{bmatrix} \right. $$
$$\left. ... \frac{1}{P_R} \begin{bmatrix} \sum_{l=0}^{L-1} p_0^{(R,\text{ref})} \mathbf{v}_l \left( \sum_{m=0}^{M_R-1} E_{l,m}^{(R)} p_{l.m}^{(R)} \varphi_{l.m}^{(R)} f_{k_m}^{(\text{R})*} \right) \\ \sum_{l=0}^{L-1} p_1^{(R,\text{ref})} \mathbf{v}_l \left( \sum_{m=0}^{M_R-1} E_{l+L,m}^{(R)} p_{l+L.m}^{(R)} \varphi_{l+L.m}^{(R)} f_{k_m}^{(\text{R})*} \right) \end{bmatrix}] \right\| \qquad (7)$$

The equation is used to minimize the MMSE of CSI distortion in all the layers by choosing to drop the indications related to non-zero coefficients with smaller amplitudes. $\{p_i^{(r,\text{ref})} p_{l.m}^{(r)}\}$ are ordered across all layers according to amplitude, the first largest $K''$ amplitudes and their phases are reported, the remaining ones are dropped.

The value of $K''_S$ may be fixed. For example the value of $K''_S$ may be determined as a ratio of $K_S$, such as, as $K_S/2$. The value of $K''_S$ or the ratio may be alternatively indicated by higher layer. In such embodiment, the size of the indication, i.e. bitmap for each layer, is unchanged but the sum of "1"s in the bitmap for each layer is smaller than the NNZC in UCI part 1. The sizes of the indications 602 and 603 are reduced and thus the payload of UCI part 2 is reduced.

In a further embodiment, the terminal device 120 may discard indications associated with one polarization to reduce the size of UCI part 2. The terminal device 120 may determine a polarization with a lower magnitude from two polarizations for a transmission layer of the at least one transmission layer, for one or each of the at least transmission layer. The magnitude of polarization may be determined based on for example the parameter "SCI" shown in Table 1, or the reference value of $p_0^{(r,\text{ref})}$ and $p_1^{(r,\text{ref})}$. The terminal device 120 may then select a third number of pairs of amplitude indication and phase indication corresponding to the selected polarization, from a third plurality of pairs of amplitude indication and phase indication for the second transmission layer. For example, the terminal device 120 may select all the pairs of LC coefficients associated with a stronger polarization of the two polarizations.

Next, the terminal device 120 may update a non-zero coefficient indication for the transmission layer based on the third number of pairs of amplitude indication and phase indication. The non-zero coefficient indication indicates positions of the third number of pairs of amplitude indication and phase indication. For example, the terminal device 120 may update the indication 601, i.e. the bitmap for one or each of the at least transmission layer. Then, the terminal device 120 may discard at least one pair of amplitude indication and phase indication in the third plurality of pairs of amplitude indication and phase indication other than the third number of pairs of amplitude indication and phase indication. For example, the terminal device 120 may discard all of the pairs of LC coefficients associated with a weaker polarization of the two polarizations. In this case, the value of the third number is determined based on the number of non-zero coefficients associated with the weaker polarization.

The terminal device 120 may perform the above polarization based discarding process on each or some of the at least one transmission layer. In such embodiment, UCI part 1 is not affected and the sizes of indications 601-603 are reduced. The size of bitmap per layer is changed from $2LM_r$ to $LM_r$, resulting in a reduced size of UCI part 2A. Some entries in indications 602 and 603 related to the weaker polarization are discarded, resulting in a reduced size of UCI part 2B. As an example, in UCI part 1, the reported value of NNZC for layer 1 is 6, where L=2, $M_1$ =4. After discarding, in UCI part 2, the bitmap for layer 1 is [10000100], which indicates only the stronger polarization as indicated by the SCI indication. Therefore, in such embodiment, both the payloads of UCI part 2A and part 2B can be reduced.

In a still further embodiment, the terminal device 120 may discard indications by assuming that the CSI configuration parameter "L" is changed to "L/2"or the CSI configuration parameter "$M_r$" is changed to "$M_r$/2" for UCI part 2. The terminal device 120 may then report the UCI part 2 based on the reduced CSI configuration parameters rather than the original CSI configuration parameters.

It is to be noted that the discarding rules described with respect to any of the embodiments may also be known by the network device 110 such that upon receiving of CSI report, the network device 110 may determine a codeword from the type II CSI codebook.

To reduce the overhead for CSI transmission, two-step FD basis selection may be implemented to compress CSI. In this two-step FD basis selection, an intermediate set of FD basis may be first determined and selection of FD basis for each layer may then be indicated based on the intermediate set of FD basis. Such embodiments will be described below with respect to Figs. 7-9.

Fig. 7 is a schematic diagram illustrating a process 700 for CSI compression according to some embodiments of the present disclosure. The terminal device 120 determines 705 an ordered subset of FD basis for at least one transmission layer. The at least one transmission layer is reported for communication by the terminal device 120 to the network device 110. The ordered subset of FD basis is selected from an ordered set of FD basis, for example DFT vectors as described above.

The terminal device 120 determines 710 an intermediate set of FD basis by a shifting operation based on the ordered subset of FD basis. The intermediate set of FD basis may for example refer to the "intermediate FD basis set" as shown in Table 1. The number of FD basis in the intermediate set may be represent by $N_3$' herein. The terminal device 120 transmits 715 at least a number indication to the network device 110 as part of channel state information, and the number indication indicates a number of FD basis in the intermediate set. For example, the terminal device 120 at least transmits the number indication to the network device 110, such as in UCI part 1 as indicated by "Size indication of intermediate set $N_3$' " shown in Table 1. The maximum possible value of $N_3$' may be fixed or higher layer configured to be N. The default value of N can be $N_3$. To save overhead, the bitwidth in the UCI part 1 to indicate the "Size indication of intermediate set $N_3$' "

can be determined as $\left\lceil \log_2\{(min(N, \sum_{r=1}^{Rmax} M_r) - max_{r\in\{1,...,Rmax\}}M_r + 1\}\right\rceil$ , where $M_r$ is the number configured by the network device 110 for selecting the FD basis subset for layer r. For example, it can be configured such

that $M_r = \lceil p * N_3 \rceil, p \in \{\frac{1}{4}, \frac{1}{2}\}$.

Now shifting operation is given in detail. As mentioned above, the enhanced type II CSI report has a form of

$$\boldsymbol{W} = \boldsymbol{W}_1 \widetilde{\boldsymbol{W}}_2^{(r)} \boldsymbol{W}_f^{(r)H}$$ for the layer r. The vectors of selected FD basis subset (e.g. the ordered subset of FD basis

mentioned above) $\boldsymbol{W}_f^{(r)} = \left[ \boldsymbol{f}_{k_0}^{(r)} \ \boldsymbol{f}_{k_1}^{(r)} \ ... \ \boldsymbol{f}_{k_{M_r-1}}^{(r)} \right]$ for layer r (the indices are sorted as $k_0 < k_1 < ... < k_{M_r-1}$), can be multiplexed by a rotation matrix $\boldsymbol{R}$ with a parameter $k_* \in \{1, ..., N_3\}$

$$R = \begin{bmatrix} 1 & 0 & & 0 \\ 0 & \ddots & & \vdots \\ 0 & \cdots & & e^{j2\pi\frac{(N_3-1)k_*}{N_3}} \end{bmatrix} \qquad (8)$$

where the index set $\{mod(k_0 - k_*, N_3), mod(k_1 - k_*, N_3), \ldots, mod(k_{M_r-1} - k_*, N_3)\}$ are sorted in an ascending order as $\left\{k'_0, k'_1, \ldots, k'_{M_r-1}\right\}$ where $k'_0 < k'_1 < \cdots < k'_{M_r-1}$. It means the ordered index set $\{k_0, k_1, \ldots, k_{M_r-1}\}$ for the selected FD basis subset are N3-modula-shifted as $\left\{k'_0, k'_1, \ldots, k'_{M_r-1}\right\}$ by a shift of $k_*$.

Then the new FD basis subset are expressed by N3-modula-shifting from the original $W_f^{(r)}$ as

$$W_f^{(S,r)} = \begin{bmatrix} f_{k'_0}^{(r)} & f_{k'_1}^{(r)} & \cdots & f_{k'_{M_r-1}}^{(r)} \end{bmatrix} = RW_f^{(r)}P \qquad (9)$$

where the matrix $P$ is a proper unique permutation matrix of size $M_r * M_r$.

The corresponding $\widetilde{W}_2^{(r)}$ is also shifted by the permutation matrix $P$ as

$$\widetilde{W}_2^{(S,r)} = \widetilde{W}_2^{(r)}P \qquad (10)$$

After receiving the reported UCI with shifting operations, the network device 120 can reconstruct CSI reporting by using the shifted and reported $\widetilde{W}_2^{(S,r)}$ and $W_f^{(S,r)}$ as

$$W' = W_1\widetilde{W}_2^{(S,r)}W_f^{(S,r)H} = WR^H \qquad (11)$$

This means that the PMI of a CSI report differs from the original ones without shifting by only one phase factor, and the N3-modula-shifted does not need to be known by the network device 110.

When more than one transmission layers are configured for communication, the terminal device 120 may perform same shifting operation with respect to each of the layers. Alternatively, the terminal device 120 may perform shifting operations with respect to the layers independently.

In some embodiments, the terminal device 120 may determine a first ordered subset of FD basis for a first transmission layer and a second ordered subset of FD basis for a second transmission layer, and the first transmission layer is different from the second transmission layer. Then, the terminal device 120 may determine a union set of FD basis based on a union of the first ordered subset of FD basis and the second ordered subset of FD basis, and perform the shifting operation on FD bases in the union set of FD basis to obtain the intermediate set of FD basis.

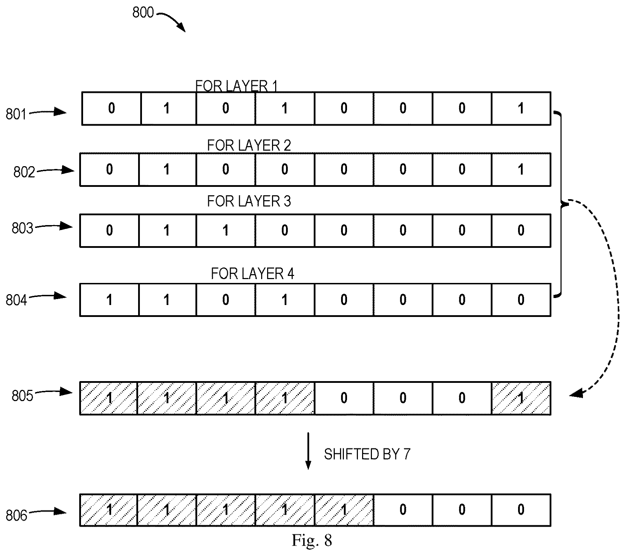

Such an example is described with reference to Fig. 8. Fig. 8 shows a schematic diagram 800 illustrating FD basis selection according to some embodiments of the present disclosure. Only for purpose of illustration without any limitation, selection of FD basis is shown by way of a bitmap. In the example shown in Fig. 8, the bitmaps 801-804 represent the subset of FD basis selected for layers 1-4, respectively. The bitmap 805 represents a union set of FD basis that covers a union of the subset of basis for each of layers 1-4. For the bitmap 805, with a starting point at $M^{initial}$ and a size $N_3'$, the FD basis in this union set is given by indices $mod(M_{initial}+n,N_3)$, $n=0,1,..,N_3'-1$. This union set as illustrated by the bitmap 805 may be further shifted to simplify the indication of FD basis.

For example, the terminal device 120 may shift the union set of FD basis by $M^{initial}$ to obtain the intermediate set of FD basis. As the example shown in Fig. 8, the bitmap 805 is shifted by 7 to obtain the bitmap 806, which represents the intermediate set of FD basis. Such an intermediate set of FD basis may be considered as a window. Due to the shifting operation, the terminal device 120 may accordingly update corresponding indications, for example, indications associated with $W_f^{(r)}$ and $\widetilde{W}_2^{(r)}$ are updated as indications associated with $W_f^{(S,r)}$ and $\widetilde{W}_2^{(S,r)}$.

If $N_3'$ is neither fixed nor configured by higher-layer, the terminal device 120 may report the size $N_3'$ of the intermediate set to the network device 110, for example, in the UCI part 1. The terminal device 120 may also report (for example, in UCI part 2) either $N_3'$-bit bitmap or $\left\lceil \log_2 \binom{N_3'}{M_r} \right\rceil$ bit-indicator to indicate the FD basis used for each layer. In such embodiments, with the same shifting operation on each subset of FD basis for the layers, it can be ensured that the first basis in the ordered set of FD basis, or the starting index $M^{initial}$ for the window of intermediate set is fixed. As such, the indication for the intermediate set may be omitted in UCI part 2. For example, the parameter "Indication of intermediate FD basis set" as shown in Table 1 may omitted.

As mentioned above, the shiftting operation may be performed independently with respect to the layers. In some embodiments, the terminal device 120 may determine a first ordered subset of FD basis for a first transmission layer and a second ordered subset of FD basis for a second transmission layer, and the first transmission layer is different from the second transmission layer. The terminal device 120 may then perform the shifting operation on FD bases in the first ordered subset of FD basis and the second ordered subset of FD basis independently to obtain a first shifted version of the first ordered subset of FD basis and a second shifted version of the second ordered subset of FD basis. Next, the terminal device 120 may determine the intermediate set of FD basis based on a union of the first shifted version and the second shifted version.

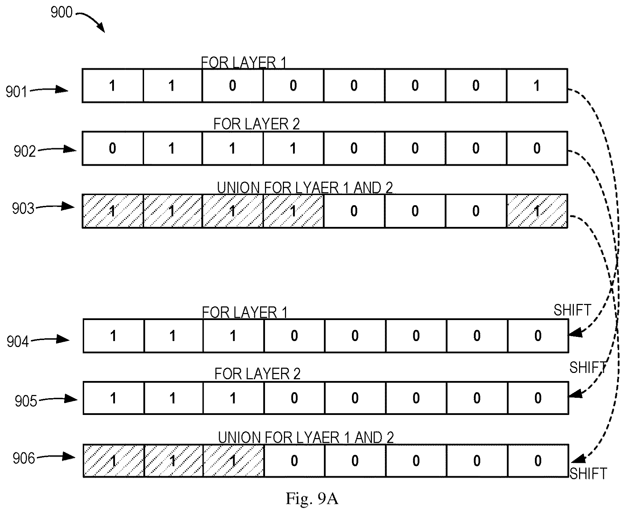

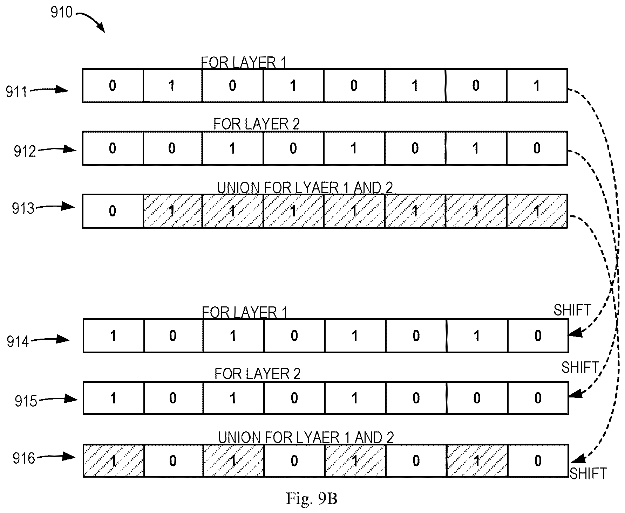

Examples are described with reference to Figs. 9A and 9B. Fig. 9A shows a schematic diagram 900 illustrating FD basis selection according to some embodiments of the present disclosure. Fig. 9A shows an example of window based intermediate set. The bitmap 901 represents the subset of FD basis selected for layer 1 without shift and the bitmap 902 represents the subset of FD basis selected for layer 2 without shift. The bitmap 903 represents a union set of FD basis without shift based on the subset of FD basis for layer 1 and the subset of FD basis for layer 2.

The bitmap 904 represents a shifted version (shifted by 7) of the subset of FD basis for layer 1 and the bitmap 905 represents a shifted version (shifted by 1) of the subset of FD basis for layer 2. The bitmap 906 represents the intermediate set as determined by the terminal device 120 based on independent shifting operations on subsets of FD basis for different layers, layers 1 and 2 in this example. As can be seen in the bitmap 906, the resulting window length to be reported is significantly reduced as compare to the window length in the bitmap 903. In another example, the bitmap for each layer can be firstly shifted to the lexicographical maximum value (e.g., "0100" and "0011" are shifted to "1000" and "1100" if there are two layers and N3=4). The value of N3-N3' in the window-based intermediate set where N3' is reported can correspond to the minimum number of consecutive zeros in the least significant bits for all the layers, i.e., N3-N3'=2 such that N3'=2.

Fig. 9B shows a schematic diagram 910 illustrating FD basis selection according to some embodiments of the present disclosure. Fig. 9B shows an example of combinatorial-index-based intermediate set. The bitmap 911 represents the subset of FD basis selected for layer 1 without shift and the bitmap 912 represents the subset of FD basis selected for layer 2 without shift. The bitmap 913 represents a union set of FD basis without shift based on the subset of FD basis for layer 1 and the subset of FD basis for layer 2.

The bitmap 914 represents a shifted version (shifted by 7) of the subset of FD basis for layer 1 and the bitmap 915 represents a shifted version (shifted by 2) of the subset of FD basis for layer 2. The bitmap 916 represents the intermediate set as determined by the terminal device 120 based on independent shifting operations on subsets of FD basis for different layers, layers 1 and 2 in this example. As can be seen in the bitmap 916, the size of the resulting intermediate set to be reported is significantly reduced as compare to the intermediate set in the bitmap 913. The modula-shift plays an important role in reducing the intermediate set size.

In such embodiments, the independent shifting operation on the subset of FD basis for each layer is intended to find a maximum number of zeros (N3-N3') at the same position in the bitmap, and the first FD basis in the set of FD basis (for example the first vector in DFT matrix) is valid, or in other word, is selected by at least one transmission layer.

In such embodiments, the terminal device 120 may report the size $-N_3'$ ($N_3' \le N_3$), for example, in UCI part 1. The terminal device 120 may further report an indication of the intermediate set (which is also referred to as a set indication). By the modula-shifting operation described above, the first FD basis can be always default to be selected, and thus the set indication in such a case has a size of $\left\lceil \log_2 \binom{N_3 - 1}{N_3' - 1} \right\rceil$, which means that the remaining $N_3' - 1$ bases for the intermediate set are selected from the remaining $N_3$ - 1 bases. This further reduces the overhead of CSI transmission.

The terminal device 120 may also report (for example, in UCI part 2) either $N_3'$-bit bitmap or $\left\lceil \log_2 \binom{N_3'}{M_r} \right\rceil$ bit-indicator to indicate the FD basis used for each layer.

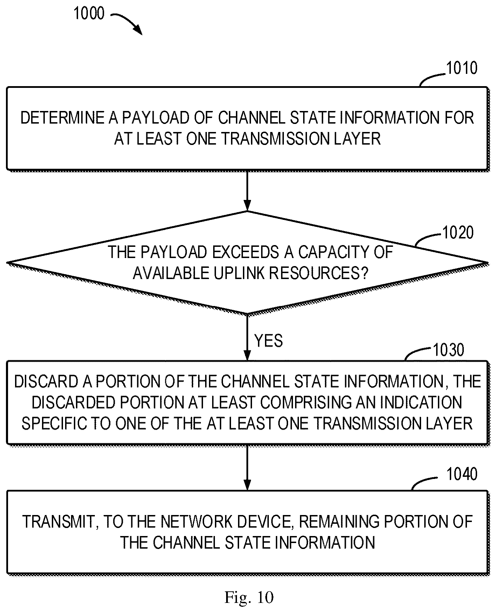

Fig. 10 shows a flowchart of an example method 1000 in accordance with some embodiments of the present disclosure. The method 1000 can be implemented at for example the terminal device 120 shown in Fig. 1. It is to be understood that the method 1000 may include additional blocks not shown and/or may omit some blocks as shown, and the scope of the present disclosure is not limited in this regard. For the purpose of discussion, the method 1000 will be described with reference to Fig. 1.

At block 1010, the terminal device 120 determines a payload of channel state information for at least one transmission layer. The at least one transmission layer is configured for communication between the terminal device 120 and a network device 110.

At block 1020, the terminal device 120 determines whether the payload exceeds a capacity of available uplink resources. If the terminal device 120 determines that the payload exceeds the capacity of available uplink resources, the process proceeds to block 1030.

At block 1030, the terminal device 120 discards a portion of the channel state information. The discarded portion at least comprises an indication specific to one of the at least one transmission layer.

In some embodiments, discarding the portion of the channel state information comprising: determining, from the channel state information, a group of layer-specific indications for at least one of the at least one transmission layer; and discarding the group of layer-specific indications.

In some embodiments, the group includes layer-specific indications for all of the at least one transmission layer, and the method further comprises: determining, from the channel state information, a group of layer-common indications for all of the at least one transmission layer; and discarding the group of layer-common indications.

In some embodiments, discarding the portion of the channel state information comprising: determining a first number of non-zero coefficients for a first transmission layer of the at least one transmission layer, the first number of non-zero coefficients indicating a number of pairs of amplitude indication and phase indication for a gain to be reported to the network device; selecting the first number of pairs of amplitude indication and phase indication from a first plurality of pairs of amplitude indication and phase indication for the first transmission layer; updating a non-zero coefficient indication for the first transmission layer based on the first number of pairs of amplitude indication and phase indication, the non-zero coefficient indication indicating positions of the first number of pairs of amplitude indication and phase indication; and discarding at least one pair of amplitude indication and phase indication in the first plurality of pairs of amplitude indication and phase indication other than the first number of pairs of amplitude indication and phase indication.

In some embodiments, selecting the first number of pairs of amplitude indication and phase indication comprising: determining an amplitude value for each pair of the first plurality of pairs of amplitude indication and phase indication; and selecting the first number of pairs of amplitude indication and phase indication based on the determined amplitude values.

In some embodiments, discarding the portion of the channel state information comprising: determining a second number of non-zero coefficients for all of the at least one transmission layer, the second number of non-zero coefficients indicating a number of pairs of amplitude indication and phase indication for a gain to be reported to the network device; selecting the second number of pairs of amplitude indication and phase indication from a second plurality of pairs of amplitude indication and phase indication for all of the at least one transmission layer; updating a non-zero coefficient indication for each of the at least one transmission layer based on the second number of pairs of amplitude indication and phase indication, the non-zero coefficient indication indicating positions of the selected pairs of amplitude indication and phase indication for respective transmission layer; and discarding at least one pair of amplitude indication and phase indication in the second plurality of pairs of amplitude indication and phase indication other than the second number of pairs of amplitude indication and phase indication.

In some embodiments, selecting the second number of pairs of amplitude indication and phase indication comprising: determining an amplitude value for each pair of the second plurality of pairs of amplitude indication and phase indication; and selecting the second number of pairs of amplitude indication and phase indication based on the determined amplitude values.

In some embodiments, discarding the portion of the channel state information comprising: determining a polarization with a lower magnitude from two polarizations for a second transmission layer of the at least one transmission layer; selecting a third number of pairs of amplitude indication and phase indication corresponding to the selected polarization, from a third plurality of pairs of amplitude indication and phase indication for the second transmission layer; updating a non-zero coefficient indication for the second transmission layer based on the third number of pairs of amplitude indication and phase indication, the non-zero coefficient indication indicating positions of the third number of pairs of amplitude indication and phase indication; and discarding at least one pair of amplitude indication and phase indication in the third plurality of pairs of amplitude indication and phase indication other than the third number of pairs of amplitude indication and phase indication.

At block 1040, the terminal device 120 transmits, to the network device 110, remaining portion of the channel state information.

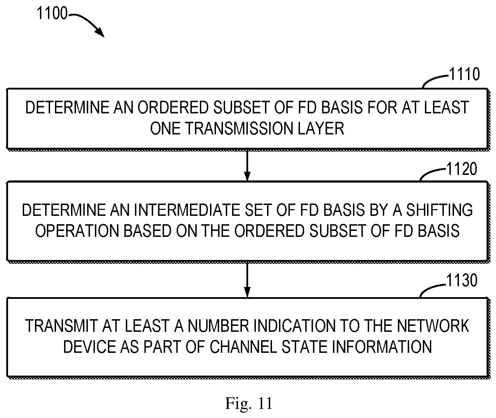

Fig. 11 shows a flowchart of an example method 1100 in accordance with some embodiments of the present disclosure. The method 1100 can be implemented at for example the terminal device 120 shown in Fig. 1. It is to be understood that the method 1000 may include additional blocks not shown and/or may omit some blocks as shown, and the scope of the present disclosure is not limited in this regard. For the purpose of discussion, the method 1100 will be described with reference to Fig. 1.

At block 1110, the terminal device 120 determines an ordered subset of frequency domain (FD) basis for at least one transmission layer. The at least one transmission layer is configured for communication between the terminal device 120 and a network device 110, and the ordered subset of FD basis is selected from an ordered set of FD basis.

At block 1120, the terminal device 120 determines an intermediate set of FD basis by a shifting operation based on the ordered subset of FD basis.

In some embodiments, determining the ordered subset of FD basis for the at least one transmission layer comprises: determining a first ordered subset of FD basis for a first transmission layer and a second ordered subset of FD basis for a second transmission layer, the first transmission layer being different from the second transmission layer; and determining the intermediate set of FD basis comprises: determining a union set of FD basis based on a union of the first ordered subset of FD basis and the second ordered subset of FD basis; and performing the shifting operation on FD bases in the union set of FD basis to obtain the intermediate set of FD basis.

In some embodiments, determining the ordered subset of FD basis for the at least one transmission layer comprises: determining a first ordered subset of FD basis for a first transmission layer and a second ordered subset of FD basis for a second transmission layer, the first transmission layer being different from the second transmission layer; and determining the intermediate set of FD basis comprises: performing the shifting operation on FD bases in the first ordered subset of FD basis and the second ordered subset of FD basis independently to obtain a first shifted version of the first ordered subset of FD basis and a second shifted version of the second ordered subset of FD basis; and determining the intermediate set of FD basis based on a union of the first shifted version and the second shifted version.

In some embodiments, the method further comprises: determining a set indication to indicate FD bases in the intermediate set of FD basis; and transmitting the set indication to the network device as part of the channel state information.

At block 1130, the terminal device 120 transmits at least a number indication to the network device 110 as part of channel state information. The number indication indicates a number of FD basis in the intermediate set.

In some embodiments, the method further comprises: determining a selection indication for the at least one transmission layer based on mapping between the ordered subset of FD basis and the intermediate set of FD basis, the selection indication indicating a selection of FD bases in the intermediate set; and transmitting the selection indication to the network device as part of the channel state information.

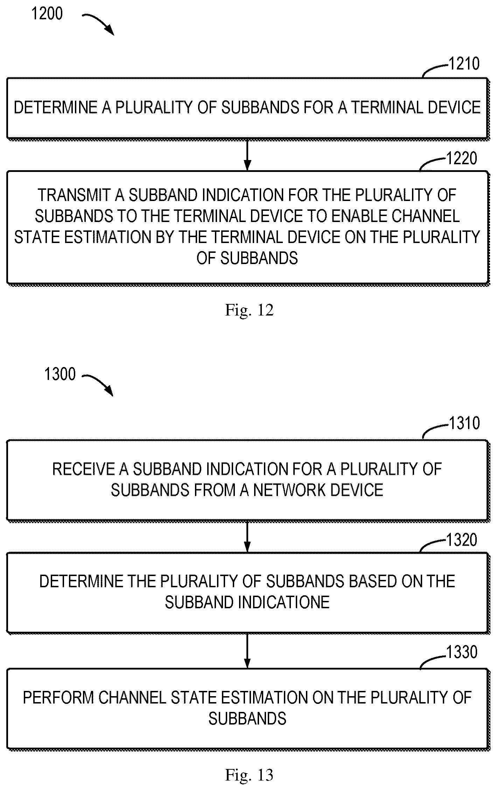

Fig. 12 shows a flowchart of an example method 1200 in accordance with some embodiments of the present disclosure. The method 1200 can be implemented at for example the network device 110 shown in Fig. 1. It is to be understood that the method 1200 may include additional blocks not shown and/or may omit some blocks as shown, and the scope of the present disclosure is not limited in this regard. For the purpose of discussion, the method 1200 will be described with reference to Fig. 1.

At block 1210, the network device 110 determines a plurality of subbands for a terminal device 120. The plurality of subbands are continuously distributed in frequency domain or spaced apart evenly in frequency domain.

At block 1220, the network device 110 transmits a subband indication for the plurality of subbands to the terminal device 120 to enable channel state estimation by the terminal device on the plurality of subbands.

In some embodiments, transmitting the subband indication for the plurality of subbands comprises transmitting at least one of: an indication of a starting subband and an indication of a number of subbands in the plurality of subbands; an indication of the starting subband and an indication of an ending subband; an indication of the starting subband, an indication of the number of subbands in the plurality of subbands and an indication of an offset between adjacent subbands in the plurality of subbands; an indication of the starting subband, an indication of the ending subband and an indication of the offset between adjacent subbands in the plurality of subbands; and an indication of positions of the plurality of subbands in a wideband.

Fig. 13 shows a flowchart of an example method 1300 in accordance with some embodiments of the present disclosure. The method 1300 can be implemented at for example the terminal device 120 shown in Fig. 1. It is to be understood that the method 1300 may include additional blocks not shown and/or may omit some blocks as shown, and the scope of the present disclosure is not limited in this regard. For the purpose of discussion, the method 1300 will be described with reference to Fig. 1.

At block 1310, the terminal device 120 receives a subband indication for a plurality of subbands from a network device 110. The plurality of subbands are continuously distributed in frequency domain or spaced apart evenly in frequency domain.

At block 1320, terminal device 120 determines the plurality of subbands based on the subband indication. At block 1330, terminal device 120 performs channel state estimation on the plurality of subbands.

In some embodiments, receiving the subband indication for the plurality of subbands comprises receiving at least one of: an indication of a starting subband and an indication of a number of subbands in the plurality of subbands; an indication of the starting subband and an indication of an ending subband; an indication of the starting subband, an indication of the number of subbands in the plurality of subbands and an indication of an offset between adjacent subbands in the plurality of subbands; an indication of the starting subband, an indication of the ending subband and an indication of the offset between adjacent subbands in the plurality of subbands; and an indication of positions of the plurality of subbands in a wideband.

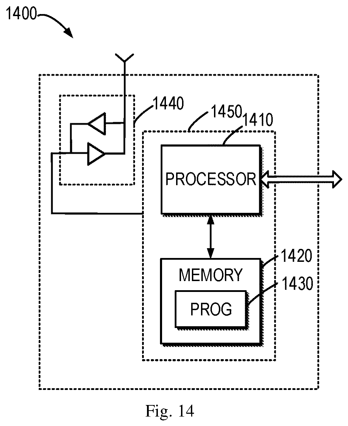

Fig. 14 is a simplified block diagram of a device 1400 that is suitable for implementing embodiments of the present disclosure. The device 1400 can be considered as a further example implementation of the network device 110 or the terminal device 120 as shown in Fig. 1. Accordingly, the device 1400 can be implemented at or as at least a part of the network device 110 or the terminal device 120.

As shown, the device 1400 includes a processor 1410, a memory 1420 coupled to the processor 1410, a suitable transmitter (TX) and receiver (RX) 1440 coupled to the processor 1410, and a communication interface coupled to the TX/RX 1440. The memory 1410 stores at least a part of a program 1430. The TX/RX 1440 is for bidirectional communications. The TX/RX 1440 has at least one antenna to facilitate communication, though in practice an Access Node mentioned in this application may have several ones. The communication interface may represent any interface that is necessary for communication with other network elements, such as X2 interface for bidirectional communications between eNBs, S1 interface for communication between a Mobility Management Entity (MME)/Serving Gateway (S-GW) and the eNB, Un interface for communication between the eNB and a relay node (RN), or Uu interface for communication between the eNB and a terminal device.

The program 1430 is assumed to include program instructions that, when executed by the associated processor 1410, enable the device 1400 to operate in accordance with the embodiments of the present disclosure, as discussed herein with reference to Figs. 10-13. The embodiments herein may be implemented by computer software executable by the processor 1410 of the device 1400, or by hardware, or by a combination of software and hardware. The processor 1410 may be configured to implement various embodiments of the present disclosure. Furthermore, a combination of the processor 1410 and memory 1410 may form processing means 1450 adapted to implement various embodiments of the present disclosure.

The memory 1410 may be of any type suitable to the local technical network and may be implemented using any suitable data storage technology, such as a non-transitory computer readable storage medium, semiconductor-based memory devices, magnetic memory devices and systems, optical memory devices and systems, fixed memory and removable memory, as non-limiting examples. While only one memory 1410 is shown in the device 1400, there may be several physically distinct memory modules in the device 1400. The processor 1410 may be of any type suitable to the local technical network, and may include one or more of general purpose computers, special purpose computers, microprocessors, digital signal processors (DSPs) and processors based on multicore processor architecture, as non-limiting examples. The device 1400 may have multiple processors, such as an application specific integrated circuit chip that is slaved in time to a clock which synchronizes the main processor.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the process or method as described above with reference to any of Figs. 3, 5, 6, 8, 12 and 13. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

The above program code may be embodied on a machine readable medium, which may be any tangible medium that may contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in language specific to structural features and/or methodological acts, it is to be understood that the present disclosure defined in the appended claims is not necessarily limited to the specific features or acts described above. Rather, the specific features and acts described above are disclosed as example forms of implementing the claims.

The present application also includes the following numbered clauses:

1. A method for communication, comprising:

   determining a payload of channel state information for at least one transmission layer, the at least one transmission layer used for communication between a terminal device and a network device;
   in response to a determination that the payload exceeds a capacity of available uplink resources, discarding a portion of the channel state information, the discarded portion at least comprising an indication specific to one of the at least one transmission layer; and
   transmitting, to the network device, remaining portion of the channel state information.

2. The method of clause 1, wherein discarding the portion of the channel state information comprising:

   determining, from the channel state information, a group of layer-specific indications for at least one of the at least one transmission layer; and
   discarding the group of layer-specific indications.

3. The method of clause 2, wherein the group includes layer-specific indications for all of the at least one transmission layer, the method further comprising:

   determining, from the channel state information, a group of layer-common indications for all of the at least one transmission layer; and
   discarding the group of layer-common indications.

4. The method of clause 1, wherein discarding the portion of the channel state information comprising:

   determining a first number of non-zero coefficients for a first transmission layer of the at least one transmission layer, the first number of non-zero coefficients indicating a number of pairs of amplitude indication and phase indication for a gain to be reported to the network device;
   selecting the first number of pairs of amplitude indication and phase indication from a first plurality of pairs of amplitude indication and phase indication for the first transmission layer;
   updating a non-zero coefficient indication for the first transmission layer based on the first number of pairs of amplitude indication and phase indication, the non-zero coefficient indication indicating positions of the first number of pairs of amplitude indication and phase indication; and
   discarding at least one pair of amplitude indication and phase indication in the first plurality of pairs of amplitude indication and phase indication other than the first number of pairs of amplitude indication and phase indication.

5. The method of clause 4, wherein selecting the first number of pairs of amplitude indication and phase indication comprising:

   determining an amplitude value for each pair of the first plurality of pairs of amplitude indication and phase indication; and
   selecting the first number of pairs of amplitude indication and phase indication based on the determined amplitude values.

6. The method of clause 1, wherein discarding the portion of the channel state information comprising:

determining a second number of non-zero coefficients for a group of the at least one transmission layer, the second number of non-zero coefficients indicating a number of pairs of amplitude indication and phase indication for a gain to be reported to the network device;
selecting the second number of pairs of amplitude indication and phase indication from a second plurality of pairs of amplitude indication and phase indication for all of the at least one transmission layer;
updating a non-zero coefficient indication for each of the at least one transmission layer based on the second number of pairs of amplitude indication and phase indication, the non-zero coefficient indication indicating positions of the selected pairs of amplitude indication and phase indication for respective transmission layer; and
discarding at least one pair of amplitude indication and phase indication in the second plurality of pairs of amplitude indication and phase indication other than the second number of pairs of amplitude indication and phase indication.

7. The method of clause 6, wherein selecting the second number of pairs of amplitude indication and phase indication comprising:

determining an amplitude value for each pair of the second plurality of pairs of amplitude indication and phase indication; and
selecting the second number of pairs of amplitude indication and phase indication based on the determined amplitude values.

8. The method of clause 1, wherein discarding the portion of the channel state information comprising:

determining a polarization with a lower magnitude from two polarizations for a second transmission layer of the at least one transmission layer;
selecting a third number of pairs of amplitude indication and phase indication corresponding to the selected polarization, from a third plurality of pairs of amplitude indication and phase indication for the second transmission layer;
updating a non-zero coefficient indication for the second transmission layer based on the third number of pairs of amplitude indication and phase indication, the non-zero coefficient indication indicating positions of the third number of pairs of amplitude indication and phase indication; and
discarding at least one pair of amplitude indication and phase indication in the third plurality of pairs of amplitude indication and phase indication other than the third number of pairs of amplitude indication and phase indication.

9. A method for communication, comprising:

determining an ordered subset of frequency domain (FD) basis for at least one transmission layer, the at least one transmission layer configured for communication between a terminal device and a network device, the ordered subset of FD basis selected from an ordered set of FD basis;
determining an intermediate set of FD basis by a shifting operation based on the ordered subset of FD basis; and
transmitting at least a number indication to the network device as part of channel state information, the number indication indicating a number of FD basis in the intermediate set.

10. The method according to clause 9, wherein determining the ordered subset of FD basis for the at least one transmission layer comprises:

determining a first ordered subset of FD basis for a first transmission layer and a second ordered subset of FD basis for a second transmission layer, the first transmission layer being different from the second transmission layer; and
wherein determining the intermediate set of FD basis comprises:

determining a union set of FD basis based on a union of the first ordered subset of FD basis and the second ordered subset of FD basis; and
performing the shifting operation on FD bases in the union set of FD basis to obtain the intermediate set of FD basis.

11. The method of clause 9, wherein determining the ordered subset of FD basis for the at least one transmission layer comprises:

determining a first ordered subset of FD basis for a first transmission layer and a second ordered subset of FD basis for a second transmission layer, the first transmission layer being different from the second transmission layer; and

wherein determining the intermediate set of FD basis comprises:

performing the shifting operation on FD bases in the first ordered subset of FD basis and the second ordered subset of FD basis independently to obtain a first shifted version of the first ordered subset of FD basis and a second shifted version of the second ordered subset of FD basis; and

determining the intermediate set of FD basis based on a union of the first shifted version and the second shifted version.

12. The method of clause 11, further comprising:

determining a set indication to indicate FD bases in the intermediate set of FD basis; and
transmitting the set indication to the network device as part of the channel state information.

13. The method of clause 9, further comprising:

determining a selection indication for the at least one transmission layer based on mapping between the ordered subset of FD basis and the intermediate set of FD basis, the selection indication indicating a selection of FD bases in the intermediate set; and
transmitting the selection indication to the network device as part of the channel state information.

14. A method for communication, comprising:

determining a plurality of subbands for a terminal device, the plurality of subbands being continuously distributed in frequency domain or spaced apart evenly in frequency domain; and
transmitting a subband indication for the plurality of subbands to the terminal device to enable channel state estimation by the terminal device on the plurality of subbands.

15. The method of clause 14, wherein transmitting the subband indication for the plurality of subbands comprises transmitting at least one of:

an indication of a starting subband and an indication of a number of subbands in the plurality of subbands;
an indication of the starting subband and an indication of an ending subband;
an indication of the starting subband, an indication of the number of subbands in the plurality of subbands and an indication of an offset between adjacent subbands in the plurality of subbands;
an indication of the starting subband, an indication of the ending subband and an indication of the offset between adjacent subbands in the plurality of subbands; and
an indication of positions of the plurality of subbands in a wideband.

16. A method for communication, comprising:

receiving a subband indication for a plurality of subbands from a network device, the plurality of subbands being continuously distributed in frequency domain or spaced apart evenly in frequency domain;
determining the plurality of subbands based on the subband indication; and
performing channel state estimation on the plurality of subbands.

17. The method of clause 16, wherein receiving the subband indication for the plurality of subbands comprises receiving at least one of:

an indication of a starting subband and an indication of a number of subbands in the plurality of subbands;
an indication of the starting subband and an indication of an ending subband;
an indication of the starting subband, an indication of the number of subbands in the plurality of subbands and an indication of an offset between adjacent subbands in the plurality of subbands;
an indication of the starting subband, an indication of the ending subband and an indication of the offset between adjacent subbands in the plurality of subbands; and
an indication of positions of the plurality of subbands in a wideband.

18. A device, comprising:

a processor; and
a memory coupled to the processing unit and storing instructions thereon, the instructions, when executed by the processing unit, causing the apparatus to perform the method according to any of clauses 1-8.

19. A device, comprising:

a processor; and
a memory coupled to the processing unit and storing instructions thereon, the instructions, when executed by the processing unit, causing the apparatus to perform the method according to any of clauses 9-13.

20. A device, comprising:

a processor; and
a memory coupled to the processing unit and storing instructions thereon, the instructions, when executed by the processing unit, causing the apparatus to perform the method according to any of clauses 14-15.

21. A device, comprising:

a processor; and
a memory coupled to the processing unit and storing instructions thereon, the instructions, when executed by the processing unit, causing the apparatus to perform the method according to any of clauses 16-17.

22. A computer readable medium having instructions stored thereon, the instructions, when executed on at least one processor, causing the at least one processor to carry out the method according to any of clauses 1-8.

23. A computer readable medium having instructions stored thereon, the instructions, when executed on at least one processor, causing the at least one processor to carry out the method according to any of clauses 9-13.

24. A computer readable medium having instructions stored thereon, the instructions, when executed on at least one processor, causing the at least one processor to carry out the method according to any of clauses 14-15.

25. A computer readable medium having instructions stored thereon, the instructions, when executed on at least one processor, causing the at least one processor to carry out the method according to any of clauses 16-17.

## Claims

1. A method performed by a terminal device, comprising:

generating channel state information (CSI) including a first group, a second group, and a third group, wherein the first group includes information related to a sum value of non-zero coefficients for at least one transmission layer, the second group includes information related to a spatial domain, and the third group includes information related to phase coefficients and amplitude coefficients, and wherein the second group has a higher priority than the third group; and
in a case where information is omitted from the CSI, omitting the information starting from a part of the third group within the CSI.

2. The method of claim 1, wherein the information related to the spatial domain is information calculated by an equation using at least N1, N2, and L.

3. The method of claim 1, wherein the third group further includes information related to a frequency domain.

4. The method of claim 1, wherein, in a case where the information is omitted from the CSI, a part of information related to the phase coefficients and the amplitude coefficients included in the third group is omitted.

5. A terminal device comprising:

means for generating channel state information (CSI) including a first group, a second group, and a third group, wherein the first group includes information related to a sum value of non-zero coefficients for at least one transmission layer, the second group includes information related to a spatial domain, and the third group includes information related to phase coefficients and amplitude coefficients, and wherein the second group has a higher priority than the third group; and

means for omitting, in a case where information is omitted from the CSI, the information starting from a part of the third group within the CSI.

6. The terminal device of claim 5, wherein the information related to the spatial domain is information calculated by an equation using at least N1, N2, and L.

7. The terminal device of claim 5, wherein the third group further includes information related to a frequency domain.

8. The terminal device of claim 5, wherein, in a case where the information is omitted from the CSI, a part of information related to the phase coefficients and the amplitude coefficients included in the third group is omitted.

Fig. 1

200

110　NETWORK DEVICE

120　TERMINAL DEVICE

205

210

215

220

Fig. 2

300

301    302    303    304

| SB1 | SB2 | SB3 | SB4 | SB5 | SB6 |

SUBBANDS

Fig. 3A

350

311    ←OFFSET 320→    312    313

| SB1 | SB2 | SB3 | SB4 | SB5 | SB6 |

SUBBANDS

Fig. 3B

400

| NETWORK DEVICE | 110 | | TERMINAL DEVICE | 120 |

405

410

415

Fig. 4

500

| Priority | Indications | |
|---|---|---|
| UCI part 2: Layer 1 | FD basis subset selection indicator | 501 |
| | Bitmap for each layer | |
| | Strongest coefficient indicator (SCI) | |
| | LC coefficients: phase | |
| | LC coefficients: amplitude | |
| UCI part 2: Layer 2 | FD basis subset selection indicator | 502 |
| | Bitmap for each layer | |
| | Strongest coefficient indicator (SCI) | |
| | LC coefficients: phase | |
| | LC coefficients: amplitude | |
| UCI part 2: Layer 3 | FD basis subset selection indicator | 503 |
| | Bitmap for each layer | |
| | Strongest coefficient indicator (SCI) | |
| | LC coefficients: phase | |
| | LC coefficients: amplitude | |
| UCI part 2: Layer 4 | FD basis subset selection indicator | 504 |
| | Bitmap for each layer | |
| | Strongest coefficient indicator (SCI) | |
| | LC coefficients: phase | |
| | LC coefficients: amplitude | |

Fig. 5A

550

| Priority | Indications | |
|---|---|---|
| UCI part 2: Layer group A including layers 1,2 | FD basis subset selection indicator | 511 |
| | Bitmap for each layer | |
| | Strongest coefficient indicator (SCI) | |
| | LC coefficients: phase | |
| | LC coefficients: amplitude | |
| UCI part 2: Layer group B including layers 3,4 | FD basis subset selection indicator | 512 |
| | Bitmap for each layer | |
| | Strongest coefficient indicator (SCI) | |
| | LC coefficients: phase | |
| | LC coefficients: amplitude | |

Fig. 5B

600

| | Indications |
|---|---|
| UCI part 2A | SD basis subset selection indicator |
| | Indication of intermediate FD basis set |
| | Bitmap for each layer |
| UCI part 2B | Strongest coefficient indicator (SCI) |
| | FD basis subset selection indicator |
| | LC coefficients: phase [some entries are dropped] |
| | LC coefficients: amplitude [some entries are dropped] |

601
602
603

Fig. 6

700

| 110 | 120 |
|---|---|
| NETWORK DEVICE | TERMINAL DEVICE |

705

710

715

Fig. 7

Fig. 8

900

**FOR LAYER 1**

901

| 1 | 1 | 0 | 0 | 0 | 0 | 0 | 1 |
|---|---|---|---|---|---|---|---|

**FOR LAYER 2**

902

| 0 | 1 | 1 | 1 | 0 | 0 | 0 | 0 |
|---|---|---|---|---|---|---|---|

**UNION FOR LYAER 1 AND 2**

903

| 1 | 1 | 1 | 1 | 0 | 0 | 0 | 1 |
|---|---|---|---|---|---|---|---|

**FOR LAYER 1**

904

| 1 | 1 | 1 | 0 | 0 | 0 | 0 | 0 |
|---|---|---|---|---|---|---|---|

SHIFT

**FOR LAYER 2**

905

| 1 | 1 | 1 | 0 | 0 | 0 | 0 | 0 |
|---|---|---|---|---|---|---|---|

SHIFT

**UNION FOR LYAER 1 AND 2**

906

| 1 | 1 | 1 | 0 | 0 | 0 | 0 | 0 |
|---|---|---|---|---|---|---|---|

SHIFT

Fig. 9A

910

FOR LAYER 1

911

| 0 | 1 | 0 | 1 | 0 | 1 | 0 | 1 |
|---|---|---|---|---|---|---|---|

FOR LAYER 2

912

| 0 | 0 | 1 | 0 | 1 | 0 | 1 | 0 |
|---|---|---|---|---|---|---|---|

UNION FOR LYAER 1 AND 2

913

| 0 | 1 | 1 | 1 | 1 | 1 | 1 | 1 |
|---|---|---|---|---|---|---|---|

FOR LAYER 1                                              SHIFT

914

| 1 | 0 | 1 | 0 | 1 | 0 | 1 | 0 |
|---|---|---|---|---|---|---|---|

FOR LAYER 2                                              SHIFT

915

| 1 | 0 | 1 | 0 | 1 | 0 | 0 | 0 |
|---|---|---|---|---|---|---|---|

UNION FOR LYAER 1 AND 2

916

| 1 | 0 | 1 | 0 | 1 | 0 | 1 | 0 |
|---|---|---|---|---|---|---|---|

SHIFT

Fig. 9B

1000

1010

DETERMINE A PAYLOAD OF CHANNEL STATE INFORMATION FOR AT LEAST ONE TRANSMISSION LAYER

1020

THE PAYLOAD EXCEEDS A CAPACITY OF AVAILABLE UPLINK RESOURCES?

YES

1030

DISCARD A PORTION OF THE CHANNEL STATE INFORMATION, THE DISCARDED PORTION AT LEAST COMPRISING AN INDICATION SPECIFIC TO ONE OF THE AT LEAST ONE TRANSMISSION LAYER

1040

TRANSMIT, TO THE NETWORK DEVICE, REMAINING PORTION OF THE CHANNEL STATE INFORMATION

Fig. 10

1100 ⌐

┌─1110
DETERMINE AN ORDERED SUBSET OF FD BASIS FOR AT LEAST ONE TRANSMISSION LAYER

┌─1120
DETERMINE AN INTERMEDIATE SET OF FD BASIS BY A SHIFTING OPERATION BASED ON THE ORDERED SUBSET OF FD BASIS

┌─1130
TRANSMIT AT LEAST A NUMBER INDICATION TO THE NETWORK DEVICE AS PART OF CHANNEL STATE INFORMATION

Fig. 11

1200

1210

DETERMINE A PLURALITY OF SUBBANDS FOR A TERMINAL DEVICE

1220

TRANSMIT A SUBBAND INDICATION FOR THE PLURALITY OF SUBBANDS TO THE TERMINAL DEVICE TO ENABLE CHANNEL STATE ESTIMATION BY THE TERMINAL DEVICE ON THE PLURALITY OF SUBBANDS

Fig. 12

1300

1310

RECEIVE A SUBBAND INDICATION FOR A PLURALITY OF SUBBANDS FROM A NETWORK DEVICE

1320

DETERMINE THE PLURALITY OF SUBBANDS BASED ON THE SUBBAND INDICATIONE

1330

PERFORM CHANNEL STATE ESTIMATION ON THE PLURALITY OF SUBBANDS

Fig. 13

Fig. 14